# EUROPÄISCHE PATENTANMELDUNG

(11) **EP 2 279 892 A2**
(43) Veröffentlichungstag der Anmeldung: **02.02.2011**
(21) Anmeldenummer: 10007312.1
(22) Anmeldetag: 15.07.2010
(51) Int. Cl.: B60L 11/18, H02J 7/00

(54) **Lade-Steckdose zur Aufladung eines Elektroautos**

(30) Priorität: 31.07.2009 DE 102009035626
(71) Anmelder: ABB AG, 68309 Mannheim (DE)
(72) Erfinder: Lange, Manfred, Dipl.-Ing., 44229 Dortmund (DE); Wilms, Benjamin, Dipl.-Ing., 58802 Balve (DE)

(57) **Zusammenfassung**

Es wird eine Lade-Steckdose (1, 2, 3) zur Aufladung eines Elektroautos vorgeschlagen, mit einem zur Aufnahme / Integration eines Lade-Kabel (8, 12) im "Ruhezustand", bei welchem kein Fahrzeug geladen wird, geeigneten Gehäuse (15), wobei das Lade-Kabel (8, 12) mit seinem ersten Ende innerhalb des Gehäuses (15) mit Eingangs-Anschlussklemmen (7) und mit seinem zweiten Ende außerhalb des Gehäuses (15) und über eine Kabel-Durchführung (16) aus dem Gehäuse (15) geführt mit einem Fahrzeug-Steckverbinder (9) elektrisch in Verbindung steht und wobei Federmittel für den Einzug des Lade-Kabels (8, 12) in das Gehäuse (15) vorgesehen sind.

## Beschreibung

Die Erfindung betrifft eine Lade-Steckdose zur Aufladung eines Elektroautos.

Führende Autohersteller und Energiekonzerne haben sich auf einen gemeinsamen Fahrzeug-Steckverbinder für Elektroautos mit hierzu korrespondierender elektrischer Kupplung geeinigt (Industrie-Standard), mit dem Fahrzeugbesitzer weltweit die Akkumulatoren ihrer Elektroautos aufladen können.

Für die elektrische Verbindung zwischen der Lade-Steckdose und dem Fahrzeug ist ein Lade-Kabel mit einer gewissen Länge, vorzugsweise im Bereich zwischen fünf und zehn bis fünfzehn Meter erforderlich. Es wäre z. B. möglich, dieses Lade-Kabel ständig im Fahrzeug mitzuführen. Nachteilig dabei sind jedoch der Raumbedarf und das Gewicht des Lade-Kabels. Andererseits wäre es möglich, dieses Lade-Kabel in der Nähe der Lade-Steckdose zu deponieren, im Bedarfsfall auszurollen und in die Lade-Steckdose sowie in die elektrische Kupplung des Fahrzeuges einzustecken. Zweckmäßig wären dabei Maßnahmen zu treffen, welche das Kabel vor Sonneneinstrahlung und Regen / Schnee schützen und welche einen Diebstahl des Lade-Kabels verhindern.

Der Erfindung liegt die Aufgabe zugrunde, eine optimierte Lade-Streckdose zur Aufladung eines Elektroautos anzugeben.

Diese Aufgabe wird erfindungsgemäß gelöst durch eine Lade-Steckdose zur Aufladung eines Elektroautos mit einem zur Aufnahme / Integration eines Lade-Kabel im "Ruhezustand", bei welchem kein Fahrzeug geladen wird, geeigneten Gehäuse, wobei das Lade-Kabel mit seinem ersten Ende innerhalb des Gehäuses mit Eingangs-Anschlussklemmen und mit seinem zweiten Ende außerhalb des Gehäuses und über eine Kabel-Durchführung aus dem Gehäuse geführt mit einem Fahrzeug-Steckverbinder elektrisch in Verbindung steht und wobei Federmittel für den Einzug des Lade-Kabels in das Gehäuse vorgesehen sind.

Die mit der Erfindung erzielbaren Vorteile bestehen insbesondere darin, dass infolge der Integration des Lade-Kabels in der Lade-Steckdose selbst kein separates Lade-Kabel bereitgehalten werden muss, weder im Fahrzeug, noch in unmittelbarer Nähe der Lade-Steckdose selbst, d. h. alle damit verbundenen Probleme der Unterbringung und Bereithaltung des Lade-Kabels entfallen. Im Fahrzeug entsteht kein Platzbedarf für die Unterbringung des Lade-Kabels, ferner entfallen alle Nachteile, welche damit verbunden sind, das nicht unbeträchtliche Gewicht des Lade-Kabels permanent im Fahrzeug mitzuführen. Die Gefahr eines Diebstahls eines unmittelbar neben der Lade-Steckdose deponierten Lade-Kabels ist nicht gegeben. Es ist eine wassergeschützte, schmutzgeschützte und diebstahlgeschützte Unterbringung des Lade-Kabels sichergestellt.

Zweckmäßige Ausgestaltungen der Erfindung sind in den Unteransprüchen gekennzeichnet.

So kann eine automatische Kabelaufwicklung im Gehäuse integriert sein. Alternativ hierzu kann ein Spiralkabel als Lade-Kabel dienen.

Das Gehäuse kann eine Gehäusefront mit der Kabel-Durchführung aufweisen, welche mit einem Deckel abdeckbar ist. Dabei kann ein Schloss zur Verriegelung des Deckels vorgesehen sein.

Das Gehäuse kann eine Gehäusefront mit der Kabel-Durchführung aufweisen, welche mit einem Kennzeichnungsschild und / oder mit einer Anzeige-/Eingabeeinheit oder einem Display und / oder mit einer Betriebszustand-Signalisierung und / oder mit einem manuellen Ein/Aus-Schalter versehen ist.

Das Gehäuse kann ein Orientierungslicht aufweisen, wobei ein Dämmerungsschalter und / oder ein Näherungsschalter für die Ansteuerung des Orientierungslichts vorgesehen sein können.

Bein Gehäuse können Montagemittel für eine Wandbefestigung und / oder Bodenbefestigung und / oder Pfostenbefestigung vorgesehen sein.

Die Erfindung wird nachstehend an Hand der in der Zeichnung dargestellten Ausführungsbeispiele näher erläutert. Es zeigen:
- Fig. 1: eine schematische Darstellung einer eine Kabelaufwicklung aufweisenden Lade-Steckdose für Wandbefestigung mit einem daran angeschlossenen Fahrzeug (Elektroauto),
- Fig. 2: eine schematische Darstellung einer einen Deckel aufweisenden Lade- Steckdose für Wandbefestigung,
- Fig. 3: eine schematische Darstellung einer Lade-Steckdose für Bodenbefesti- gung,
- Fig. 4, 5: unterschiedlich ausgebildete Gehäusefronten einer Lade-Steckdose,
- Fig. 6: eine schematische Darstellung einer an einem Pfosten montierten Lade- Steckdose für Wandbefestigung, welche zusätzlich ein Orientierungslicht aufweist,
- Fig. 7: eine schematische Darstellung einer ein Spiralkabel aufweisenden Lade- Steckdose für Wandbefestigung.

Die vorgeschlagene Lade-Steckdose eignet sich für Wandbefestigung, Pfostenbefestigung und Bodenbefestigung. Wesentlich ist die vollständige Unterbringung des Lade-Kabels im Gehäuse der Lade-Steckdose im "Ruhezustand", bei welchem kein Fahrzeug geladen wird. Nachfolgend werden die einzelnen Ausführungsformen näher beschrieben.

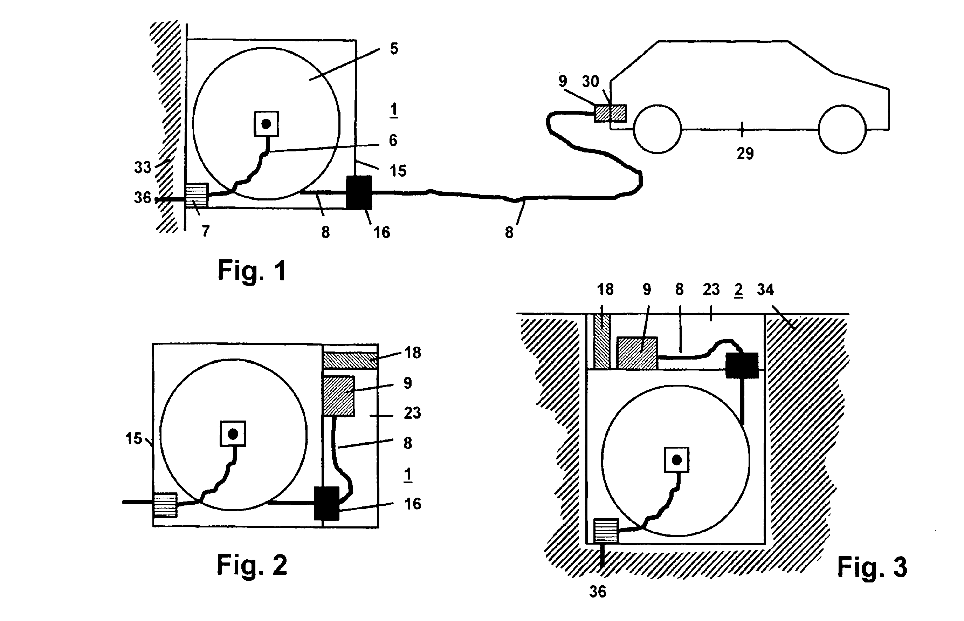

In Fig. 1 ist eine schematische Darstellung einer eine Kabelaufwicklung aufweisenden Lade-Steckdose für Wandbefestigung mit einem daran angeschlossenen Fahrzeug dargestellt. Die an einer Wand 33 montierte Lade-Steckdose 1 für WandBefestigung besitzt im Innenraum ihres Gehäuses 15 eine automatische Kabelaufwicklung 5 mit einem darauf aufrollbaren respektive davon abrollbaren Lade-Kabel 8, welches über eine Kabel-Durchführung 16 aus dem Gehäuse 15 geführt wird und an ihrem zweiten Ende einen Fahrzeug-Steckverbinder 9 (elektrischer Ausgangs-Anschluss) aufweist. Zum Aufladen der Akkumulatoren eines Fahrzeuges 29 wird dieser Fahrzeug-Steckverbinder 9 in eine am Fahrzeug befestigte, korrespondierend hierzu ausgebildete elektrische Kupplung 30 eingesteckt. Die Kabelaufwicklung 5 besitzt blockierbare Federmittel für den Einzug des Lade-Kabels in das Gehäuse15.

Beim Fahrzeug-Steckverbinder 9 und der korrespondierenden elektrischen Kupplung 30 handelt es sich vorteilhaft um standardisierte Komponenten (Industrie-Standard), wodurch es ermöglicht wird, dass die Akkumulatoren eines Fahrzeugs (Elektroautos) in schneller Art und Weise aufgeladen werden können, ohne dass dabei Adapter eingesetzt werden müssten. Die Ladespannung liegt im Bereich 400 V (vorzugsweise Dreiphasenwechselstrom) und die Stromstärke kann bis 63 A betragen.

An die elektrische Kupplung sind die Akkumulatoren des Fahrzeuges über einen Gleichrichter angeschlossen. Die Aufladung der Akkumulatoren selbst erfolgt vorzugsweise in geregelter Art und Weise über eine entsprechende Steuer- /Regelvorrichtung, welche in Form eines separaten Gerätes ausgebildet oder Teilkomponente eines Fahrzeug-Rechners sein kann.

Die automatische Kabelaufwicklung 5 ist mit ihrem ersten Ende über ein Kabel 6 mit Eingangs-Anschlussklemmen 7 verbunden, welche die Verbindung mit einem Anschlusskabel 36 herstellen, über welches die erforderliche elektrische Leistung zum Aufladen der Akkumulatoren des Fahrzeuges zur Verfügung gestellt wird.

In Fig. 2 ist eine schematische Darstellung einer einen Deckel aufweisenden Lade-Steckdose für Wandbefestigung dargestellt. Bei dieser alternativen Ausführungsform der Lade-Steckdose 1 ist die Frontseite des Gehäuses 15 mit einem Deckel 23 abdeckbar, welcher mittel eines Schlosses 18 verschließbar ist, wobei sich in geschlossener Position des Deckels 23 der Fahrzeug-Steckverbinder 9, ein Endstück des Lade-Kabels 8 und die Kabel-Durchführung 16 im Raum zwischen Deckel 23 und Frontplatte des Gehäuses 15 befinden.

In Fig. 3 ist eine schematische Darstellung einer Lade-Steckdose für Bodenbefestigung dargestellt. Diese einen Deckel 23 inklusive Schloss 18 aufweisende Lade-Steckdose 2 für Bodenbefestigung ist bündig (bodengleich) im Boden 34 (Pflaster, Garagenboden, Boden eines Carports) versenkt eingebaut, so dass sich bei geschlossener Position des Deckels 23 keinerlei Stolperstellen ergeben. Im Übrigen entspricht diese Lade-Steckdose 2 hinsichtlich ihres Aufbaues einer um 90° gedreht montierten Lade-Steckdose 1, d. h. es sind in gleicher Weise ein Fahrzeug-Steckverbinder 9, ein Lade-Kabel 8, eine automatische Kabelaufwickiung 5 und Eingangs-Anschlussklemmen 7 für ein Anschlusskabel 36 vorgesehen.

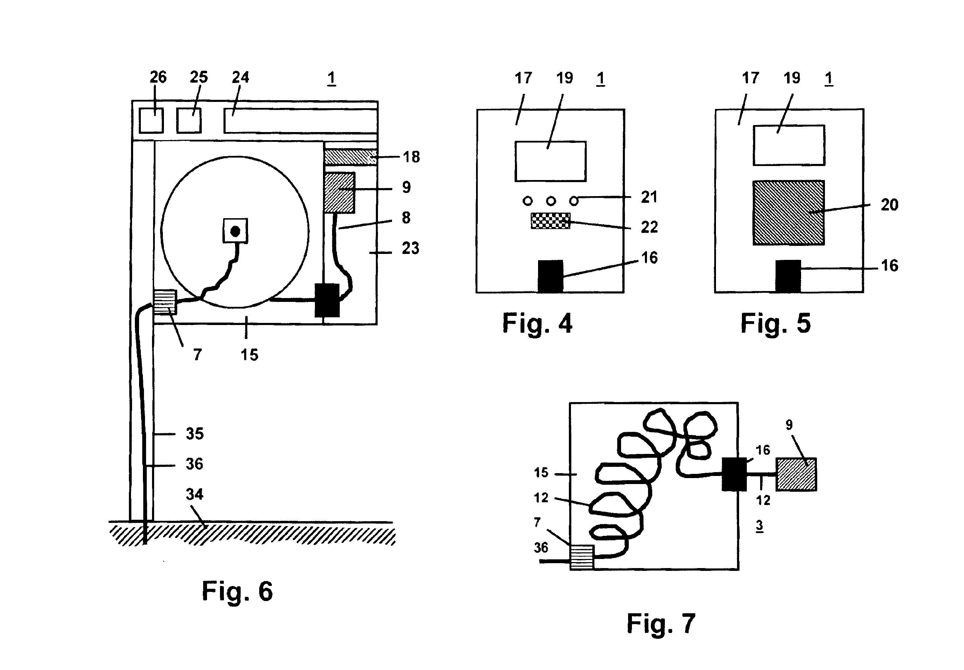

In den Fig. 4 und 5 sind unterschiedlich ausgebildete Gehäusefronten einer Lade-Steckdose dargestellt. Bei beiden gezeigten Varianten ist die Gehäusefront 17 der Lade-Streckdose 1 mit einem Kennzeichnungsschild 19 und der Kabeldurchführung 16 versehen. Auf dem Kennzeichnungsschild 19 können z. B. dauerhaft Namen, Kfz-Kennzeichen, Haus- und Wohnungsnummern, Hotel(zimmer)kennzeichnung, Herstellersymbole der Automobilhersteller usw. angezeigt werden.

Bei der Ausführungsform gemäß Fig. 4 sind eine Betriebszustand-Signalisierung 21, vorzugsweise in Form mehrere LEDs, und ein manueller Ein/Aus-Schalter 22 zusätzlich in der Gehäusefront 17 integriert. Es sind z. B. folgende Signalisierungen möglich:
- rote LED leuchtet: Ladevorgang dauert an,
- grüne LED leuchtet: Akkumulatoren des Fahrzeugs sind fertig geladen, Lade-Kabel kann abgezogen werden,
- gelbe LED leuchtet: Lade-Steckdose ist gesperrt.

Bei der Ausführungsform gemäß Fig. 5 ist eine Anzeige-/Eingabeeinheit oder Display 20 zusätzlich in der Gehäusefront 17 integriert, um auf diese Weise den aktuellen Betriebszustand anzuzeigen und ein Ein/Aus-Schalten zu ermöglichen.

In Fig. 6 ist eine schematische Darstellung einer an einem Pfosten (Halter, Ständer, Erdspieß, Bodenanker) montierten Lade-Steckdose für Wandbefestigung dargestellt, welche zusätzlich ein Orientierungslicht aufweist. Die wie die in Fig. 2 dargestellt ausgebildete und an einem Pfosten 35 montierte Lade-Steckdose 1 besitzt ein Orientierungslicht 24 auf, welches z. B. im Gehäuse 15 integriert ist und mit Hilfe eines Dämmerungsschalters 25 und eines Näherungsschalters 26 derart angesteuert wird,
- dass ein Einschalten lediglich bei Dämmerung bzw. Nacht erfolgt und
- dass ein Einschalten lediglich bei Annäherung einer Person erfolgt.

Der Pfosten 35 ist am Boden 34 befestigt, so dass das Anschlusskabel 36 zweckmäßig von den Eingangs-Anschlussklemmen 7 über eine Bohrung innerhalb des Pfostens 35 in den Boden 34 geführt werden kann. Selbstverständlich sind auch andere, vereinfachte Möglichkeiten des Einschaltens / Ausschaltens des Orientierungslichts 24 realisierbar, z. B. mittels eines separaten Ein/Aus-Schalters oder mittels der Anzeige-/Eingabeeinheit 20.

In Fig. 7 ist eine schematische Darstellung einer ein Spiralkabel aufweisenden Lade-Steckdose für Wandbefestigung dargestellt. Bei dieser Lade-Steckdose 3 wird die automatische Kabelaufwicklung 5 durch ein Spiralkabel 12 ersetzt, welches sich im "Ruhezustand", bei welchem kein Fahrzeug geladen wird, innerhalb des Gehäuses 15 befindet und welches über die Kabel-Durchführung 16 aus dem Gehäuse 15 gezogen werden kann, um derart den Anschluss des am zweiten Ende angebrachten Fahrzeug-Steckverbinders 9 (elektrischer Ausgangs-Anschluss) an der korrespondierenden Kupplung 30 des Fahrzeuges zu ermöglichen. Das erste Ende des Spiralkabels 12 kann unmittelbar mit den Eingangs-Anschlussklemmen 7 und damit mit dem Anschlusskabel 36 verbunden sein. Wie allgemein bekannt weist ein Spiralkabel Federmittel auf, welche das Bestreben haben, das Kabel in seinen ursprünglichen spiralförmigen Zustand zurückzuversetzen, was im vorliegenden Fall dazu verwendet wird, das Lade-Kabel zurück in den Innenraum des Gehäuses zu ziehen.

Für alle Ausführungsformen gilt, dass die Kabel-Durchführung 16 zweckmäßig derart ausgebildet ist, dass das Lade-Kabel 8 respektive das als Lade-Kabel dienende Spiralkabel 12 beim Einzug in den Innenraum des Gehäuses 15 von Schmutz, Wasser, Schnee usw. automatisch gereinigt wird. Hierzu kann die Kabel-Durchführung 16 z. B. mit das Lade-Kabel 8 umgreifende Bürsten oder einem Schaumstoff ausgerüstet sein

Um jegliche Stolpergefahr bei ausgezogenem Lade-Kabel 8 respektive Spiralkabel 12 zu vermeiden, sind Lade-Kabel 8 respektive Spiralkabel 12 vorzugsweise in Signalfarben ausgeführt.

### Bezugszeichenliste

- 1: Lade-Steckdose für Wandbefestigung
- 2: Lade-Steckdose für Bodenbefestigung (bodengleich)
- 3: Lade-Steckdose für Wandbefestigung (mit Spiralkabel)
- 4: -
- 5: automatische Kabelaufwicklung
- 6: Kabel
- 7: Eingangs-Anschlussklemmen
- 8: Lade-Kabel
- 9: Fahrzeug-Steckverbinder (elektrischer Ausgangs-Anschluss)
- 10: -
- 11: -
- 12: Spiralkabel als Lade-Kabel
- 13: -
- 14: -
- 15: Gehäuse
- 16: Kabel-Durchführung
- 17: Gehäusefront
- 18: Schloss
- 19: Kennzeichnungsschild
- 20: Anzeige-/Eingabeeinheit oder Display
- 21: Betriebszustand-Signalisierung
- 22: manueller Ein/Aus-Schalter
- 23: Deckel
- 24: Orientierungslicht
- 25: Dämmerungsschalter
- 26: Näherungsschalter
- 27: -
- 28: -
- 29: Fahrzeug
- 30: elektrische Kupplung zur Aufnahme des Fahrzeug-Steckverbinders
- 31: -
- 32: -
- 33: Wand
- 34: Boden
- 35: Pfosten
- 36: Anschlusskabel

## Patentansprüche

1. Lade-Steckdose (1, 2, 3) zur Aufladung eines Elektroautos mit einem zur Aufnahme / Integration eines Lade-Käbel (8, 12) im "Ruhezustand", bei welchem kein Fahrzeug geladen wird, geeigneten Gehäuse (15), wobei das Lade-Kabel (8, 12) mit seinem ersten Ende innerhalb des Gehäuses (15) mit Eingangs-Anschlussklemmen (7) und mit seinem zweiten Ende außerhalb des Gehäuses (15) und über eine Kabel-Durchführung (16) aus dem Gehäuse (15) geführt mit einem Fahrzeug-Steckverbinder (9) elektrisch in Verbindung steht und wobei Federmittel für den Einzug des Lade-Kabels (8, 12) in das Gehäuse (15) vorgesehen sind.

2. Lade-Steckdose (1, 2, 3) nach Anspruch 1, **dadurch gekennzeichnet, dass** eine automatische Kabelaufwicklung (5) im Gehäuse (15) integriert ist.

3. Lade-Steckdose (1, 2, 3) nach Anspruch 1, **dadurch gekennzeichnet, dass** ein Spiralkabel (12) als Lade-Kabel dient.

4. Lade-Steckdose (1, 2, 3) nach Anspruch 1 oder 2, **dadurch gekennzeichnet, dass** die Kabel-Durchführung (16) derart ausgebildet ist, dass das Lade-Kabel (8, 12) beim Einzug in den Innenraum des Gehäuses (15) von Schmutz, Wasser, Schnee usw. automatisch gereinigt wird.

5. Lade-Steckdose (1, 2, 3) nach einem der vorstehenden Ansprüche, **dadurch gekennzeichnet, dass** das Gehäuse (15) eine Gehäusefront (17) mit der Kabel-Durchführung (16) aufweist, welche mit einem Deckel (23) abdeckbar ist.

6. Lade-Steckdose (1, 2, 3) nach Anspruch 5, **dadurch gekennzeichnet, dass** ein Schloss (18) zur Verriegelung des Deckels (23) vorgesehen ist.

7. Lade-Steckdose (1, 2, 3) nach einem der vorstehenden Ansprüche, **dadurch gekennzeichnet, dass** das Gehäuse (15) eine Gehäusefront (17) mit der Kabel-Durchführung (16) aufweist, welche mit einem Kennzeichnungsschild (19) versehen ist.

8. Lade-Steckdose (1, 2, 3) nach einem der vorstehenden Ansprüche, **dadurch gekennzeichnet, dass** das Gehäuse (15) eine Gehäusefront (17) mit der Kabel-Durchführung (16) aufweist, welche mit einer Anzeige-/Eingabeeinheit (20) oder einem Display versehen ist.

9. Lade-Steckdose (1, 2, 3) nach einem der vorstehenden Ansprüche, **dadurch gekennzeichnet, dass** das Gehäuse (15) eine Gehäusefront (17) mit der Kabel-Durchführung (16) aufweist, welche mit einer Betriebszustand-Signalisierung (21) versehen ist.

10. Lade-Steckdose (1, 2, 3) nach einem der vorstehenden Ansprüche, **dadurch gekennzeichnet, dass** das Gehäuse (15) eine Gehäusefront (17) mit der Kabel-Durchführung (16) aufweist, welche mit einem manuellen Ein/Aus-Schalter (22) versehen ist.

11. Lade-Steckdose (1, 2, 3) nach einem der vorstehenden Ansprüche, **dadurch gekennzeichnet, dass** das Gehäuse (15) ein Orientierungslicht (24) aufweist.

12. Lade-Steckdose (1, 2, 3) nach Anspruch 11, **dadurch gekennzeichnet, dass** ein Dämmerungsschalter (25) und / oder ein Näherungsschalter (26) für die Ansteuerung des Orientierungslichts (24) vorgesehen sind.

13. Lade-Steckdose (1, 2, 3) nach einem der vorstehenden Ansprüche, **dadurch gekennzeichnet, dass** beim Gehäuse (15) Montagemittel für eine Wandbefestigung vorgesehen sind.

14. Lade-Steckdose (1, 2, 3) nach einem der vorstehenden Ansprüche, **dadurch gekennzeichnet, dass** beim Gehäuse (15) Montagemittel für eine Bodenbefestigung vorgesehen sind.

15. Lade-Steckdose (1, 2, 3) nach einem der vorstehenden Ansprüche, **dadurch gekennzeichnet, dass** beim Gehäuse (15) Montagemittel für eine Pfostenbefestigung vorgesehen sind.
